# EUROPÄISCHE PATENTANMELDUNG

(11) **EP 1 125 810 A1**
(43) Veröffentlichungstag der Anmeldung: **22.08.2001**
(21) Anmeldenummer: 00103548.4
(22) Anmeldetag: 18.02.2000
(51) Int. Cl.: B60T 17/04, F15B 21/04, F16L 11/12, F16L 53/00

(54) **Beheizbare Rohrleitung für eine hydraulische Bremsvorrichtung**

(71) Anmelder: Continental Teves AG & Co. oHG, 60488 Frankfurt (DE)
(72) Erfinder: Käfer, Wolfgang, 60596 Frankfurt (DE); Heise, Andreas, 64546 Mörfelden (DE)

(57) **Zusammenfassung**

Die Erfindung betrifft eine beheizbare Rohrleitung (1) für eine hydraulische Bremsvorrichtung, insbesondere für Kraftfahrzeuge mit einem metallischen Rohrkörper (2) und einer äußeren Umhüllung (3) aus elastischem Material. Weil derartige Rohrleitungen (1) in großem Maße und ohne irgendeine Vorzugsorientierung reproduzierbar und kostenghnstig Biegeumgeformt werden müssen, so daß das Platzangebot in einem Fahrzeug ausgeschöpft werden kann, wird vorgeschlagen zwischen der Umhüllung (3) und dem Rohrkörper (2) einen drahtförmigen Widerstandsheizleiter (4) vorzusehen, welcher zumindest eine elektrische Isolierung (5) aus elastischem Werkstoff und eine leitfähige metallische Seele (6) aufweist, wobei die Isolierung (5) die Seele (6) mit leichter Anhaftung derart umgreift, daß Seele (6) und Isolierung (5) unter der Wirkung von Kräften oder Biegemomenten axial relativ zueinander verschiebbar sind, so daß sich die Einheit aus Rohrkörper (2), Umhüllung (3) und Widerstandsheizleiter (4) bei Biegebeanspruchung isotrop verhält.

## Beschreibung

Die Erfindung betrifft eine beheizbare Rohrleitung für eine hydraulische Bremsvorrichtung, insbesondere für Kraftfahrzeuge.

Bei Kraftfahrzeug-Bremsanlagen können im Winter betrieb, d.h. bei Tieftemperaturen Probleme auftreten, wenn Bremsflüssigkeit, beispielsweise im Rahmen einer Fahrstabilitätsregelfunktion, das heißt ohne Fahrerwunsch, besonders schnell von einem Bremsflüssigkeitsreservoir, nämlich einem Bremsflüssigkeitsbehälter zu einer Radbremse mit dem Bremszylinder verlagert werden soll. Bei sinkenden Temperaturen steigt die Viskosität der Bremsflüssigkeit überproportional an. Dies führt bei sehr niedrigen Temperaturen dazu, daß die Bremsflüssigkeit nicht schnell genug angesaugt werden kann, wobei noch hinzukommt, daß mit steigender Viskosität der Druckverlust in der Rohrleitung zunimmt. Diese Hemmnisse führen zu einem verlangsamten Bremseingriff. Das Problem wird noch dadurch verstärkt, daß oftmals Hauptbremszylinder mit geringen Durchflußquerschnitten zum Einsatz kommen, durch die bei fahrerunabhängiger Bremsbetätigung Bremsflüssigkeit nachgesaugt werden muß. Bei der Fahrstabilitätsregelung besteht allerdings die generelle Anforderung, einen äußerst schnellen Bremseneingriff zu bewirken. Zur Lösung des Problems wurde bereits daran gedacht, eine separate Vorladepumpe vorzusehen. Dies würde allerdings zu erheblichem Mehraufwand mit entsprechenden Mehrkosten führen.

In der deutschen Patentanmeldung DE 197 54 163.1 wurde bereits vorgeschlagen, der Bremsanlage Mittel zum Einbringen von Wärmeenergie in die Bremsflüssigkeit zuzuordnen. Als derartiges Mittel wurde insbesondere eine elektrische Widerstandsheizeinrichtung vorgeschlagen. Unter anderem wurde dabei auch die Möglichkeit in Betracht gezogen, elektrische Heizdrähte durch eine mit dem Rohr thermisch in Kontakt stehende Kunststoffschicht durchzuführen.

Es ist schlie8lich zu berücksichtigen, da8 Rohrleitungen fhr Bremsanlagen bei vergleichsweise geringem Querschnitt zumeist eine sehr komplexe räumliche Biegeumformung mit engen Biegradien erfahren, um den Rohrleitungsverlauf an das Platzangebot in dem Fahrzeug anzupassen. Dabei besteht die generelle Anforderung, daß sich das Rohr bei den Biegeoperationen isotrop verhält. Mit anderen Worten soll keine Vorzugsorientierung des Rohres vorliegen, damit der Biegeprozeß in Großserie hinsichtlich aller Koordinatenrichtungen reproduzierbar vollzogen werden kann. Andererseits muß die Heizeinrichtung den Biegeprozeß unbeschädigt überstehen.

Die WO 97/40309 nennt ein Verfahren zum Erwärmen eines Fluids in einem definierten Volumen wie einer Rohrleitung oder einem Tank. Die dort dargestellte Vorrichtung verwendet zwar ein Widerstandsheizelement. Eine beliebige Umformung erlaubt diese Vorrichtung nicht.

Schließlich sind beheizbare Rohrleitungen aus dem Chemie-Großanlagenbau bekannt. Dort wird die Anlage aufgebaut und nach deren Fertigstellung an den notwendigen Anlagenteilen die Heizeinrichtung angebracht, indem elektrische Widerstandsheizleiter nachträglich um die Anlagenteile und Rohrleitungen gewickelt werden. Diese Vorgehensweise lässt sich nicht (wirtschaftlich) auf Rohre für Bremsanlagen übertragen.

Aufgabe der vorliegenden Erfindung ist es daher, eine wirtschaftlich üerstellbare, homogen beheizbare Rohrleitung und ein Verfahren zur Herstellung der beheizbaren Rohrleitung bereitzustellen, wobei in Großserie nahezu unbegrenzt reproduzierbare und richtungsunabhängige Biegeoperationen vornehmbar sind, ohne daß es zu Durchflußquerschnittsverengenden Einschnürungen des Rohrkörpers oder zu Beschädigungen der Heizeinrichtung durch Streckung oder Stauchung kommt. Die vorliegende Erfindung soll folglich ermöglichen, die Viskosität der in einer Rohrleitung befindlichen Bremsflüssigkeit auch bei sehr niedrigen Au8entemperaturen innerhalb gewünschter Bereiche zu halten, um somit die Funktion einer hydraulischen Kraftfahrzeug-Bremsanlage mit all ihren Teilfunktionen wie Antiblockierfunktion und Fahrstabilitätsfunktion mit geringem Aufwand zu gewährleisten.

Diese Aufgabe wird erfindungsgemäß dadurch gelöst, daß zwischen der Umhüllung und dem Rohrkörper ein drahtförmiger Widerstandsheizleiter vorgesehen ist, welcher zumindest eine elektrische Isolierung aus elastischem Werkstoff und eine leitfähige metallische Seele aufweist, wobei die Isolierung die Seele mit leichter Anhaftung derart umgreift, daß Seele und Isolierung unter der Wirkung von Kräften oder Biegemomenten axial relativ zueinander verschiebbar sind, so daß sich die Einheit aus Rohrkörper, Widerstandsheizleiter und Umhüllung bei Biegebeanspruchung isotrop verhält. Auf diese Art und Weise wird eine Beeinflussung der Biegeeigenschaften des Rohrs durch den zusätzlich angebrachten Widerstandsheizleiter bei geringem Aufwand wirkungsvoll vermieden. Mit anderen Worten laßt die Isolierung durch ihre Elastizität eine Streckung in einem biegeradiusentfernten Bereich und eine Stauchung in einem biegeradiusnahen Bereich (jeweils aus Sicht des Biegewerkzeugs gesehen) zu, während die metallische Seele gewisserma8en relativ zu diesen gestreckten oder gestauchten Abschnitten verschiebbar ist. Besonders vorteilhaft ist die Verwendung von Poytetrafluorethylen als Isolierung, weil dadurch die Reibung zwischen Seele und Isolierung verringert und infolgedessen die Beschädigungsgefahr bei Biegung weiter verringert wird. In der Konsequenz kann durch Wärmezufuhr unmittelbar auf die Fließfähigkeit der Bremsflüssigkeit Einfluß genommen werden, ohne auf eine kostenaufwendige Zusatzpumpe angewiesen zu sein.

Der Widerstandsheizleiter wird vorzugsweise beginnend mit einer geschlossenen Leiterschleife von einem Ende des geraden Rohrkörpers mit konstanter Steigung auf den Umfang des Rohrkörpers aufgewickelt. Für besonders fließkritische Bereiche kann eine verringerte Steigung angezeigt sein, so daß sich der axiale Windungsabstand verringert und auf diesem Wege gezielt mehr Wärmeenergie in die Bremsflüssigkeit eingebracht werden kann.

Gemäß einer bevorzugten Ausführungsform weist zumindest ein Teilabschnitt des Heizleiters im Vergleich mit rohrkörperseitigen Windungen eine verringerte, wärmeabführende Ankopplung auf, so daß ein unbeabsichtigt hoher Stromfluß (beispielsweise infolge einem defekten Stromsteuer- oder Regelungsgerätes) oder eine zu lange Einschaltdauer zu einer elektrischen Unterbrechung des Stromfluß führt, denn die in dem Widerstandsheizleiter entstehende Wärme wird in diesem Bereich nicht oder nur geringfügig abgeleitet und auch nur geringfügig abgestrahlt, so daß es zum Durchbrennen des Widerstandsheizleiters kommt.

Erfindungsgemäß wird schließlich ein Verfahren zur Herstellung einer beheizbaren Rohrleitung vorgeschlagen, wobei der Widerstandsheizleiter ausgehend von einer geschlossenen Leiterschleife zweigängig um den Rohrkörper gewickelt wird, und daß in einem zweiten Arbeitsgang die Umhüllung auf den mit dem Widerstandsheizleiter umwickelten Rohrkörper aufgebracht wird.

Weitere Vorteile und Einzelheiten der Erfindung gehen aus Unteransprüchen im Zusammenhang mit der Beschreibung und der Zeichnung hervor. In der Zeichnung zeigt:
- Fig. 1: eine erste Ausführungsform der Erfindung mit einem Steckergehäuse im Schnitt;
- Fig.2: eine zweite Ausführungsform mit abgeänderter Wicklungsführung, und
- Fig. 3: eine Einzelheit im Bereich einer Leiterschleife.

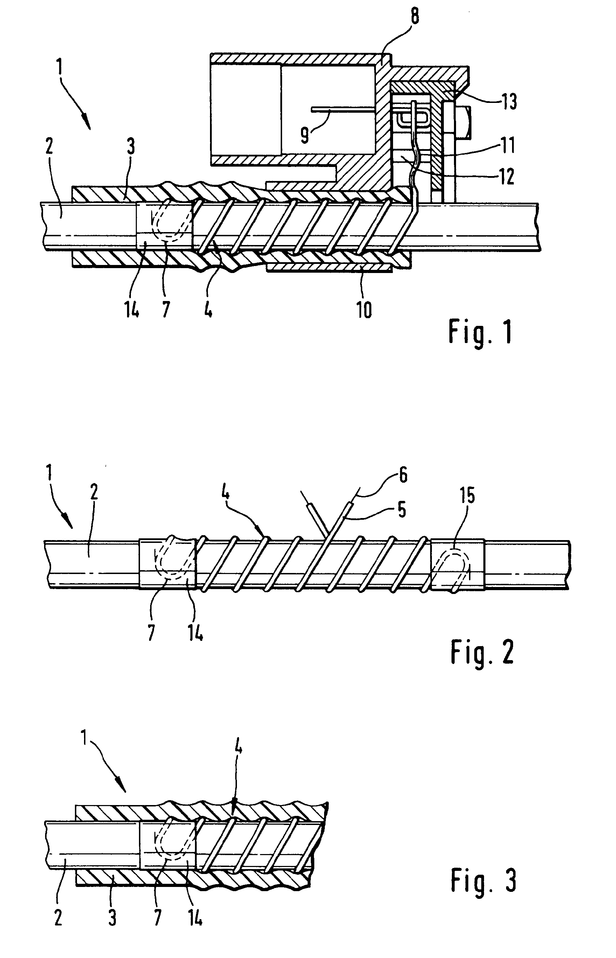

In Fig.1 ist eine mit einem Fluid befüllbare Rohrleitung 1 mit einem metallischen Rohrkörper 2 und einer Umhüllung 3 aus elastischem Material gezeigt. Die Umhüllung 3 ist aufgeschnitten dargestellt, so daß der Blick auf die Außenseite des Rohrkörpers 2 frei ist. Ein draht- oder kabelartiger Widerstandsheizleiter 4 ist mit Wicklungen um den Rohrkörper 2 geführt und umfasst eine elektrische Isolierung 5 aus elastischem Werkstoff, vorzugsweise PTFE (Poly-Tetra-Fluorethylen) und eine leitfähige metallische Seele 6, vorzugsweise aus Kupferdraht. PTFE verringert aufgrund seiner selbstschmierenden Eigenschaft die Reibung zwischen Seele 6 und Isolierung 5, so daß ein gberdehnen oder Reißen (infolge Biegung des Rohrs) vermieden wird. Die Isolierung 5 umgreift die Seele 6 mit leichter Anhaftung derart, daß Seele 6 und Isolierung 5 unter der Wirkung von Kräften oder Biegemomenten axial relativ zueinander verschiebbar sind. Die Rohrleitung 2 verhält sich infolge der Merkmalskombination des Anspruchs 1 isotrop, das heißt trotz dem am Umfang vorgesehenen Widerstandsheizleiter 4, welcher grundsätzlich bei der Ermittlung des Biegewiderstandsmoments der Rohrleitung berücksichtigt werden müßte, liegt keine bevorzugte Biegeebene vor.

Wie die Fig. 1 weiterhin zeigt, ist der Widerstandsheizleiter 4 mit einer geschlossenen Leiterschleife 7 an einer Seite eines Wicklungsbereichs beginnend mit konstanter Steigung schraubengangartig um den Umfang des Rohrkörpers 2 bis zu einer elektrischen Kontaktierungsstelle gewunden. Im Bedarfsfall ist es möglich, die Steigung der Wicklungen an den Wärmebedarf anzupassen. Deshalb kann ein Rohrkörperbereich mit hohem Wärmebedarf (insbesondere an den Enden des Wicklungsbereichs) mit geringer Steigung versehen werden, wodurch sich der axiale Abstand der einzelnen Wicklungen zueinander verringert. Es versteht sich, daß sich die einzelnen Wicklungen des Widerstandsheizleiters 4 an keiner Stelle überkreuzen dürfen, um die Gefahr von Kurzschlüssen zu vermeiden.

Vorzugsweise ist der Widerstandsheizleiter 4 beginnend an dem ersten Wicklungsende mit einer geschlossenen Leiterschleife 7 zweigängig um den Rohrkörper 2 geführt. Der Wicklungsbereich endet an der elektrischen Kontaktierungsstelle. Es ist dort ein Steckergehäuse 8 mit elektrischen Anschlußmitteln nämlich vorstehenden Kontaktstiften 9 vorgesehen. Das Steckergehäuse 8 umgreift mit einem Teil 10, beispielsweise einem Sockel, die Rohrleitung 1 entweder im Bereich der Umhüllung 3 oder den Rohrkörper 2 ohne Umhüllung.

Bei einer nicht in den Figuren gezeigten Ausführungsform ist kein Steckergehäuse sondern eine elektrische Kontaktierung mit einem sogenannten fly-lead gegeben, welcher quasi als von dem Heizleiter 4 abgehender Leitungsstrang der Stromzuführung dient, ohne auf eine ortsfeste Kontaktierungsstelle im engeren Sinne angewiesen zu sein. Die Kontaktierung des Widerstandsheizleiters 4 an den Kontaktstiften erfolgt beispielsweise mit Hilfe sogenannter Wire-Wrap-Technik durch Umwickeln der kantigen Kontaktstifte unter elastischer Zugvorspannung des Widerstandsheizleiter 4. Es kommt für die Kontaktierung aber ganz generell auch die sogenannte Schneid-Klemm-Technik in betracht, wobei durch gleichsames Aufspießen des Leiters zukzessiv zunächst die Isolierung 5 durchschnitten und sodann die stromführende Leiterseele 6 zwischen Schenkeln der Kontaktzunge eingeklemmt wird.

Zumindest ein Teilabschnitt 11 des Widerstandsheizleiters 4 ist im Vergleich mit rohrkörperseitigen Heizwindungen verringert thermisch angekoppelt, so daß die entstehende Wärme beispielsweise im Fall eines defekten elektrischen Steuergerätes kaum abgeleitet und auch nur geringfügig abgestrahlt werden kann. Folglich verbleibt die Wärme weitgehend in dem Teilabschnitt 11, welcher beispielsweise infolge zu langer Stromeinschaltdauer oder einem unbeabsichtigt hohen Strom durchbrennt. Mit anderen Worten wird der Stromfluß in solchen Fällen unterbrochen. Dadurch wird vermieden, daß bei einem oben bereits geschilderten Defekt eine zu hohe Wärmeenergie in die Bremsflüssigkeit eingebracht würde, durch die diese möglicherweise siedet. Diese Absicherung ist ein Teil eines mehrstufigen Sicherheitskonzeptes. Zur Vermeidung von Fehlfunktionen wird zunächst im Bereich einer Steuerungshardware eine Leiterunterbrechung (Plus- oder Minusleiter) vorgenommen werden und nur wenn diese Maßnahmen nicht den gewünschten Effekt erzielen tritt die oben geschilderte Unterbrechung auf. Soweit die Steuerung oder Regelung der eingebrachten Wärmeenergie zur Einsteuerung einer bestimmten Viskosität in der Bremsflüssigkeit betroffen ist, wird auch hinsichtlich der hierfür notwendigen elektrischen Hardware in vollem Umfang auf die nicht vorveröffentlichten Patentanmeldungen DE 198 44 486.9, DE 198 44 485.0 und der PCT/EP98/06150 Bezug genommen, deren diesbezüglicher Offenbarungsgehalt ausdrücklich in die vorliegende Patentanmeldung mit einbezogen wird. In diesem Zusammenhang wird die Heizungselektronik einschließlich dem notwendigen Steueroder Regelalgorthmus vorzugsweise bei oder in einem elektrischen mikroprozessorgesteuerten Regler zur Steuerung des Bremsdrucks angesiedelt sein.

Der Teilabschnitt befindet sich gemäß der Fig. 1 in einer Kammer des Steckergehäuse 8, so daß er vor direktem Zugriff geschützt und dennoch der Luft ausgesetzt ist. Vorzugsweise ist eine abnehmbaren oder zu öffnenden Abdeckung 13 oder eine permanente Sichtöffnung für Kontrollzwecke vorhanden. Sehr vorteilhaft ist eine nicht in den Figuren gezeigte Variante, bei der der Teilabschnitt 11 mit Hilfe der abnehmbaren Abdeckung 13 austauschbar ist.

Bei der Einzelheit gemäß Figur 3 ist ersichtlich, daß die Leiterschleife 7 mit einem Klebeband 14 an dem Rohrkörperende gesichert ist, so daß die Herstellung der Wicklung im Rahmen der Fertigung vereinfacht vorgenommen werden kann. Es ist in diesem Zusammenhang ebenfalls denkbar, für diese erste Fixierung Klebstoff vorzusehen.

Bei der Herstellung der beheizbaren Rohrleitung wird gemäß einer ersten Herstellungsmethode von dem geraden, unverformten metallischen Rohrkörper 2 ausgegangen. An einem Ende eines Wicklungsbereiches wird sodann, beispielsweise mit Klebeband 14 eine Leiterschleife 7 befestigt. Sodann wird der Widerstandsheizleiter 4 zweigängig bis zu einem zweiten Ende des Wicklungsbereiches gewickelt und zwar ohne Umkehrung der Wicklungsrichtung. In einem weiteren Arbeitsgang wird die Umhüllung 3 über die Einheit aus Rohrkörper 2 und Widerstandsheizleiter 4 geschoben. Dies wird gemäß einer ersten Variante dadurch bewirkt, daß der Innendurchmesser der Umhüllung 3, welcher geringer ist, als der Außendurchmesser des Rohrkörpers 2 elastisch aufgeweitet wird (beispielsweise mit Preßluft oder einem Dorn). Sodann wird die elastische Umhüllung 3 übergestreift und die Aufweitemittel entfernt, so daß die elastische Rückverformung der Umhüllung fhr eine Befestigung derselben an dem Rohrkörper 2 sorgt. In Abwandlung der Erfindung ist auch eine Tauchbeschichtung oder die Nutzung eines thermisch schrumpfenden Schlauches denkbar, um die Umhüllung herzustellen.

Bei einem anderen Verfahren wird der Widerstandsheizleiter 4 ausgehend von einer Kontaktierungsstelle eingängig bis zu einem ersten Ende des Wicklungsbereichs gewickelt. Dann erfolgt die Bildung eines Wendepunktes mit Hilfe einer Leiterschleife 7 unter Drehrichtungsumkehr wobei die Wicklung über die Kontaktierungsstelle hinaus bis zu einem anderen Wicklungsende geführt wird, erneut die Drehrichtung zur Bildung eines Wendepunktes mit einer zweiten Leiterschleife (15) geändert wird, und schließlich bis zu der Kontaktierungsstelle zurückgewickelt wird. Bei allen Arbeitsgängen ist besonders darauf zu achten, daß zu keinen Wicklungshberkreuzungen kommt. Daraufhin erfolgt das Aufbringen der Umhüllung 3 wie bereits beschrieben.

## Patentansprüche

1. Beheizbare Rohrleitung (1) für eine hydraulische Bremsvorrichtung, insbesondere für Kraftfahrzeuge mit einem metallischen Rohrkörper (2) und einer äußeren Umhüllung (3) aus elastischem Material, **dadurch gekennzeichnet**, daß zwischen der Umhüllung (3) und dem Rohrkörper (2) ein drahtförmiger Widerstandsheizleiter (4) vorgesehen ist, welcher zumindest eine elektrische Isolierung (5) aus elastischem Werkstoff und eine leitfähige metallische Seele (6) aufweist, wobei die Isolierung (5) die Seele (6) mit leichter Anhaftung derart umgreift, daß Seele (6) und Isolierung (5) unter der Wirkung von Kräften oder Biegemomenten axial relativ zueinander verschiebbar sind, so daß sich die Einheit aus Rohrkörper (2), Umhüllung (3) und Widerstandsheizleiter (4) bei Biegebeanspruchung isotrop verhält.

2. Beheizbare Rohrleitung nach Anspruch 1, **dadurch gekennzeichnet**, daß der Widerstandsheizleiter (4) mit einer geschlossenen Leiterschleife (7) an einem Wicklungsende beginnend mit konstanter Steigung am Umfang des Rohrkörpers (2) vorgesehen ist.

3. Beheizbare Rohrleitung nach einem oder mehreren der vorhergehenden Ansprüche, **dadurch gekennzeichnet**, daß der Widerstandsheizleiter (4) zweigängig am Umfang des Rohrkörpers (2) vorgesehen ist.

4. Beheizbare Rohrleitung nach einem oder mehreren der vorhergehenden Ansprüche, **dadurch gekennzeichnet**, daß an einem anderen Wicklungsende sowie im Abstand zu der Leiterschleife (7) für die elektrische Kontaktierung des Widerstandsheizleiters (4) ein Steckergehäuse (8) mit elektrischen Kontaktmitteln (9) vorgesehen ist.

5. Beheizbare Rohrleitung nach einem oder mehreren der vorhergehenden Ansprüche, **dadurch gekennzeichnet**, daß die Isolierung (5) aus Poly-Tetra-Fluorethylen besteht oder zumindest als Bestandteil enthält.

6. Beheizbare Rohrleitung nach einem oder mehreren der vorhergehenden Ansprüche, **dadurch gekennzeichnet**, daß das Steckergehäuse (8) zumindest mit einem Teil (10) die Rohrleitung (1) umgreift.

7. Beheizbare Rohrleitung nach einem oder mehreren der vorhergehenden Ansprüche, **dadurch gekennzeichnet**, daß zumindest ein Teilabschnitt (11) des Widerstandsheizleiters (4) im Vergleich mit rohrkörperseitigen Heizwindungen verringert thermisch angekoppelt ist, so daß beispielsweise ein unbeabsichtig hoher Strom oder eine zu lange Stromeinschaltdauer zu einer elektrischen Unterbrechung des Stromfluß im Widerstandsheizleiter (4) führt.

8. Beheizbare Rohrleitung nach einem oder mehreren der vorhergehenden Ansprüche, **dadurch gekennzeichnet**, daß sich der Teilabschnitt (11) bei dem Steckergehäuse (8) befindet.

9. Verfahren zur Herstellung einer beheizbaren Rohrleitung, insbesondere nach einem oder mehreren der vorhergehenden Ansprüche 1 bis 8, **dadurch gekennzeichnet**, daß der Widerstandsheizleiter (4) ausgehend von einer Leiterschleife (7) zweigängig um einen metallischen Rohrkörper (2) gewickelt wird, und da8 in einem zweiten Arbeitsgang eine elastische Umhüllung (3) auf den mit dem Widerstandsheizleiter (4) umwickelten Rohrkörper (2) aufgebracht wird.

10. Verfahren nach Anspruch 9, **dadurch gekennzeichnet**, daß der Durchmesser der Umhüllung (3) vor deren Aufbringen auf den Rohrkörper (2) geringer ist, als der Außendurchmesser des Rohrkörpers (2), und daß die Umhüllung (3) zum Aufbringen derart elastisch aufgeweitet wird, daß die Umhüllung (3) über die Einheit aus Rohrkörper (2) und Widerstandsheizleiter (4) gestreift werden kann, und daß die Aufweitung sodann aufgehoben wird, wobei die elastische Rückverformung der Umhüllung (3) für eine Befestigung derselben an dem Rohrkörper (2) sorgt.

11. Verfahren zur Herstellung einer beheizbaren Rohrleitung, insbesondere nach einem oder mehreren der vorhergehenden Ansprüche 1 bis 8, **dadurch gekennzeichnet**, daß der Widerstandsheizleiter (4) ausgehend von einer Kontaktierungsstelle eingängig bis zu einem Ende des Wicklungsbereichs gewickelt wird, daß zur Bildung eines Wendepunktes mit einer Leiterschleife (7) die Drehrichtung geändert wird und die Wicklung über die Kontaktierungsstelle hinaus bis zu einem anderen Wicklungsende geführt wird, erneut die Drehrichtung zur Bildung eines Wendepunktes mit einer zweiten Leiterschleife (15) gewechselt wird, und schließlich bis zu der Kontaktierungsstelle gewickelt wird.
